# EUROPÄISCHE PATENTSCHRIFT

(11) **EP 2 508 330 B1**
(45) Veröffentlichungstag und Bekanntmachung des Hinweises auf die Patenterteilung: **24.09.2014**
(21) Anmeldenummer: 12155047.9
(22) Anmeldetag: 13.02.2012
(51) Int. Cl.: B29D 30/24, B29D 30/32

(54) **Vorrichtung zum Herstellen eines Fahrzeugreifens**
Device for manufacturing a vehicle tyre
Dispositif de fabrication d'un pneu de véhicule

(30) Priorität: 06.04.2011 DE 102011001837
(43) Veröffentlichungstag der Anmeldung: 10.10.2012
(73) Patentinhaber: Continental Reifen Deutschland GmbH, 30165 Hannover (DE)
(72) Erfinder: Linne, Stefan, 30900 Wedemark (DE)
(74) Vertreter: Finger, Karsten

(56) Entgegenhaltungen:
- EP-A1- 0 278 892
- EP-A1- 2 243 623
- EP-A2- 1 439 054
- WO-A1-2009/070020
- WO-A1-2010/103393
- WO-A1-2011/019272
- DE-A1-102006 012 026
- JP-A- 2010 260 220
- US-A- 3 127 294

## Beschreibung

Die Erfindung betrifft eine Vorrichtung zum Herstellen eines Fahrzeugreifens.

Bei Maschinen zur Herstellung und zum Aufbau von Fahrzeugluftreifen ist es üblich, über eine Bewegung beispielsweise Bombierköpfe positionieren zu können und über eine weitere Bewegung die Trommel in eine Drehbewegung, beispielsweise zum Anrollen des Gürtelpakets eines Fahrzeugluftreifens, zu versetzen.
Bei einer bekannten Reifenaufbaumaschine werden eine Welle und eine Spindel mit jeweils einem Motor angetrieben und können mittels einer Zahnkupplung beim Drehen der Welle mechanisch aneinander gekoppelt werden. Dadurch ist es jedoch unmöglich, gleichzeitig die Spindel zu betätigen und die Welle zu drehen. Bei dieser bekannten Vorrichtung steht zudem nur ein inkrementales Messsystem für beide Achsen zur Verfügung. Beim Wechsel zwischen den Betriebsarten "Drehen" und "Verspindeln" müssen die Stellungen der Achsen in der Steuerung gesichert und bis zum nächsten Umschalten zwischengespeichert werden. Dadurch können Fehlpositionen der Achsen eintreten.
Außerdem kann es zu Qualitätseinbußen bei den herzustellenden Reifen kommen oder die Zykluszeit zur Herstellung der Fahrzeugreifen wird beeinträchtigt. Weiterhin ist es bei einigen Reifenaufbaumaschinen wünschenswert, mindestens drei verschiedene Bewegungen in einer axial symmetrisch verfahrbaren Reifenaufbautrommel unabhängig voneinander anzutreiben.
Die EP 0 278 892 A1 offenbart eine bekannte Vorrichtung zum Herstellen von Fahrzeugreifen mit einer Reifenaufbautrommel.

Der Erfindung liegt die Aufgabe zu Grunde, eine Vorrichtung zu schaffen, mit dem Reifenrohlinge mit einer hohen Produktqualität hergestellt werden. Außerdem soll insbesondere ein exakter Synchronlauf zwischen der Trommelrotation und weiteren Verfahrbewegungen von beweglichen Teilen der Trommel möglich sein.

Gelöst wird die Aufgabe gemäß Anspruch 1.

Ein Vorteil der Erfindung ist insbesondere darin zu sehen, dass durch die erfindungsgemäße Vorrichtung ein exakter Synchronlauf zwischen der Trommelrotation und weiteren Verfahrbewegungen von beweglichen Teilen der Trommel möglich ist. Der synchrone Antrieb aller drei genannten Bewegungen wird durch den Einsatz von mindestens einem Differenzdrehgetriebe erreicht, welches die Bewegungen der Trommelwelle, der ersten und der zweiten Spindel synchron miteinander verkoppeln kann. Auf diese Weise kann die kontrollierte Rotation der Trommel erfolgen, wobei gleichzeitig die Kernklemmsegmente in axialer und radialer Richtung in einer Ruheposition verharren. Ein weiterer Vorteil besteht darin, dass alle drei Bewegungen auch kontrolliert gleichzeitig erfolgen können. Beim Rotieren der Trommel können z. B. ebenfalls die Kernklemmsegmente kontrolliert und synchron auseinandergefahren werden, um gleichzeitig die Reifenkarkasse aufzunehmen. Das gleiche gilt für die Bewegung der Kernklemmsegmente beim Bombieren des Reifenrohlings. Weiterhin ist es möglich, alle drei Bewegungen in einer Reifenaufbautrommel auszuführen. Die erfindungsgemäße Vorrichtung zeichnet sich außerdem gegenüber herkömmlichen Vorrichtungen dadurch aus, dass die Welle bei gleichen Hüben kürzer ausgeführt werden kann. Auf diese Weise kommt es zu einer geringeren Durchbiegung der Trommelwelle. Eine geringe Durchbiegung der Trommelwelle hat einen wesentlichen Einfluss auf die Verbesserung der Produktqualität der herzustellenden Fahrzeugreifen.

Bei der Erfindung ist vorgesehen, dass das Synchronisationsmittel in Form eines Differenzdrehzahlgetriebes ausgeführt ist. Der Vorteil des Einsatzes eines Differenzdrehzahlgetriebes besteht darin, dass zwei Bewegungen exakt miteinander synchronisiert werden können. Auch nach einem Stillstand der Reifenaufbaumaschine ist bei der Wiederinbetriebnahme die Synchronisation der Bewegungen zueinander weiterhin gewährleistet. Dadurch entfällt eine aufwendige Neujustierung der Vorrichtung. Statt des Einsatzes von Differenzdrehzahlgetrieben ist es ebenfalls möglich, die Antriebe elektrisch zu synchronisieren. Bei dieser Art der Ausführung würde die Funktion der Synchronisierung eine elektrische Steuerung übernehmen, die die Bewegungen entsprechend synchronisiert.

In einer weiteren vorteilhaften Weiterbildung der Erfindung ist vorgesehen, dass die Trommelwelle mit einem ersten Motor angetrieben und die erste Spindel mit einem zweiten Motor angetrieben wird, wobei die Bewegung der Trommelwelle mit der Bewegung der ersten Spindel über das erste Differenzdrehzahlgetriebe miteinander synchronisiert werden, wodurch beim Rotieren der Trommel die Kernklemmsegmente in einer Ruheposition verbleiben oder kontrolliert verfahren werden.

Dadurch können beide Bewegungen exakt zueinander ausgeführt werden. Im Normalfall wird die Trommel zum Anrollen des Gürtellaufstreifenpaketes in Rotationsbewegung versetzt, wohingegen die Kernklemmsegmente sich nicht aus ihrer Ruheposition bewegen dürfen.

In einer weiteren vorteilhaften Weiterbildung der Erfindung ist vorgesehen, dass die zweite Spindel zum Verfahren der Kernklemmsegmente in axialer Richtung mit einem dritten Motor angetrieben wird, wobei die Bewegung der zweiten Spindel mit der Bewegung der ersten Spindel über ein zweites Differenzdrehzahlgetriebes miteinander synchronisiert werden, wodurch beim Verfahren der Kernklemmsegmente in axialer Richtung die Kernklemmsegmente in radialer Richtung in einer Ruheposition verbleiben oder kontrolliert verfahren werden.
Auf diese Weise können alle drei Bewegungen exakt miteinander synchronisiert werden.

In einer weiteren vorteilhaften Weiterbildung der Erfindung ist vorgesehen, dass die erste Spindel innenliegend in einem Hohlraum der Trommelwelle angeordnet ist. Gegenüber herkömmlichen Vorrichtungen befindet sich nur eine einzige Spindel in der Welle. Das hat den Vorteil, dass diese Welle größer dimensioniert werden kann. Außerdem kann die Welle größere Kräfte übertragen bzw. die Trommelwelle kann kleiner ausgeführt werden, um auch kleinere Reifengrößen produzieren zu können.

In einer weiteren vorteilhaften Weiterbildung der Erfindung ist vorgesehen, dass die zweite Spindel außerhalb und parallel zur Trommelwelle angeordnet ist. Durch diese Anordnung kann die Vorrichtung insgesamt kompakter ausgeführt werden. Gleichzeitig wird ein exaktes Auseinanderfahren der Rollenhebel gewährleistet.

In einer weiteren vorteilhaften Weiterbildung der Erfindung ist vorgesehen, dass die zweite Spindel eine linke und rechte Spindelmutter aufweist, wobei die rechte Spindelmutter über einen Schlitten die Trommelwelle in axialer Richtung verfährt, wodurch die Kernklemmsegmente auf beiden Seiten der Trommel rotationssymmetrisch zueinander verfahren werden.
Durch diese Anordnung wird ein rotationssymmetrisches Verfahren der Kernklemmsegmente auf beiden Seiten der Trommel gewährleistet.

In einer weiteren vorteilhaften Weiterbildung der Erfindung ist vorgesehen, dass der Schlitten die Trommelwelle lagert und über eine Führung in axialer Richtung bewegt wird. Dadurch wird eine exakte Führung der Trommelwelle in axialer Richtung gewährleistet.

In einer weiteren vorteilhaften Weiterbildung der Erfindung ist vorgesehen, dass das Differenzdrehzahlgetriebe in Form eines Planetengetriebes ausgeführt ist. Ein entsprechendes Planetengetriebe lässt sich einfach mit den entsprechenden Motoren koppeln. Denkbar ist ebenfalls statt eines Planetengetriebes ein sogenanntes Harmonic-Drive-Getriebe einzusetzen.

In einer weiteren vorteilhaften Weiterbildung der Erfindung ist vorgesehen, dass das erste und zweite Differenzdrehzahlgetriebe direkt miteinander verkoppelt sind, wodurch gleichzeitig die Bewegung der zweiten Spindel mit der Bewegung der ersten Spindel und der Trommelwelle miteinander synchronisiert werden.
Dadurch können alle drei Bewegungen exakt miteinander synchronisiert werden.

In einer weiteren vorteilhaften Weiterbildung der Erfindung ist vorgesehen, dass die Differenzdrehzahlgetriebe über einzelne Zahnriemen mit der ersten Spindel, zweiten Spindel oder der Trommelwelle gekoppelt sind. Der Einsatz von Zahnriemen gewährleistet eine sichere Kraftübertragung.

In einer weiteren vorteilhaften Weiterbildung der Erfindung ist vorgesehen, dass die erste und zweite Spindel drehbar an einem Gehäuseteil gelagert sind. Dadurch wird eine kompakte Bauweise der Vorrichtung ermöglicht.

In einer weiteren vorteilhaften Weiterbildung der Erfindung ist vorgesehen, dass die Trommelwelle über ein Zwischenwelle angetrieben wird, wobei die Trommelwelle in der Zwischenwelle in axialer Richtung verfahren werden kann. Dadurch wird ein exaktes Verfahren der Kernklemmsegmente auf beiden Seiten der Trommel gewährleistet.

In einer weiteren vorteilhaften Weiterbildung der Erfindung ist vorgesehen, dass zwischen dem dritten Motor und der zweiten Spindel ein Getriebe zum Anpassen der Drehzahl der zweiten Spindel angeordnet ist.
Dadurch können die Kernklemmsegmente exakt in axialer Richtung bewegt werden.

Anhand eines Ausführungsbeispiels soll die Erfindung näher erläutert werden.

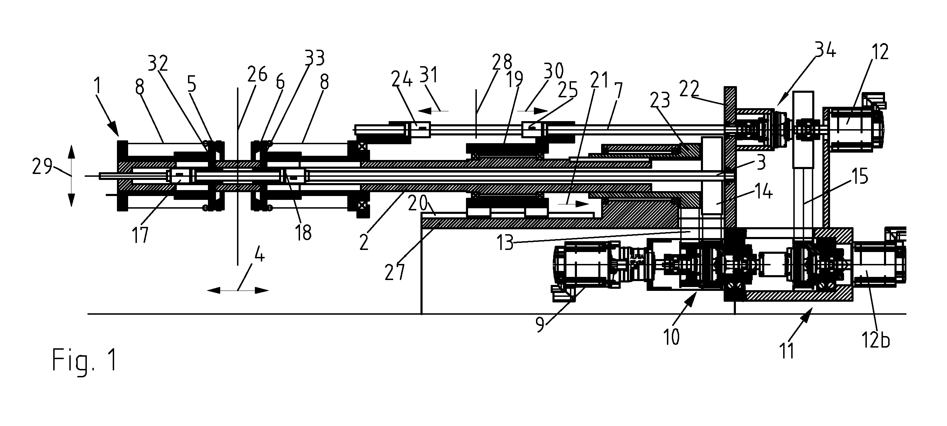

Fig. 1 zeigt die erfindungsgemäße Vorrichtung zum Herstellen von Fahrzeugreifen. Die Vorrichtung ist schematisch in einer Schnittansicht dargestellt. Bei der Trommel 1 handelt es sich um eine sogenannte Bombiertrommel. Im Normalfall wird auf dieser Trommel 1 eine vorgefertigte Reifenkarkasse angeordnet, die anschließend bombiert und mit einem koaxial angeordneten Gürtellaufstreifenpaket vereinigt wird. Beim Bombiervorgang werden die Seitenwände an den Seiten der Reifenkarkasse um die Reifenkerne herum hochgeschlagen. Die Trommel 1 umfasst die Rollenhebel 8 zum Hochschlagen der Seitenwände, die Kernklemmsegmente 5 und 6 und ist im Wesentlichen symmetrisch zu der axialen Trommelmitte 26 aufgebaut.
Die Rollenheben 8 werden z.B. pneumatisch oder über einen externen Antrieb verfahren.
Die Kernklemmsegmente 5 und 6 werden beim Bombiervorgang in axialer Richtung 4 aufeinander zu gefahren. Die Trommel 1 wird von der Trommelwelle 2 rotatorisch angetrieben. Die Rotationsbewegung der Trommel 1 ist notwendig, um das Gürtellaufstreifenpaket an der Reifenkarkasse anzurollen. Die Trommelwelle 2 wird über den Motor 9 angetrieben. Die Rotationsbewegung der Trommelwelle 2 erfolgt über das erste Differenzdrehzahlgetriebe 10. Der Motor 9 ist mit dem Differenzdrehzahlgetriebe 10 verbunden und treibt über den Zahnriemen 13 die Zwischenwelle 23 an. Die Zwischenwelle 23 steht wiederum direkt mit der Trommelwelle 2 in Verbindung, die dadurch rotatorisch angetrieben wird. Die Zwischenwelle 23 ist eine sogenannte Hohlwelle, in der die Trommelwelle koaxial angeordnet ist. Die Trommelwelle 2 kann dabei gleichzeitig in axialer Richtung 4 in der Zwischenwelle 23 verfahren werden. Diese axiale Verfahrbewegung der Trommelwelle 2 ist notwendig, um die Kernklemmsegmente 5 auf der linken Trommelseite in axialer Richtung 4 zu verfahren.

Das Zusammenfahren des linken und des rechten Kemklemmsegmentes 5 und 6 beim Bombiervorgang wird im Wesentlichen durch den Motor 12b gesteuert. Der Motor 12b gibt über die Differenzdrehzahlgetriebe 10 und 11 eine vorgegebene Drehzahl an die erste Spindel 3 zum Verfahren der Kernklemmsegmente 5 und 6 in radialer Richtung 29 weiter. Diese Bewegung ist z.B. notwendig, um die Reifenkarkasse an den Wülsten einzuklemmen oder um die Reifenkarkasse auf der Bombiertrommel 1 mit zwei vorher aufgelegten Seitenwänden zu vereinigen. Bei der ersten Klemmung werden die vorkonfektionierten Seitenwände mit den Kernklemmsegmenten 5 und 6 eingeklemmt. Anschließend werden die Seitenwände mit einem weiteren Hub der Kernklemmsegmente 5 und 6 in radialer Richtung mit der Reifenkarkasse verbunden.
Die Kraftübertragung vom Motor 12b erfolgt über den dargestellten Zahnriemen 14. Durch die Drehbewegung der Spindel 3 fahren die linke Spindelmutter und die rechte Spindelmutter 17 und 18 aufeinander zu. Die Verfahrgeschwindigkeit wird durch eine entsprechende Steigung an der Spindel vorgegeben. Die beiden Spindelmuttern 17 und 18 sind über die Zwischensegmente 32 und 33 direkt mit dem linken und dem rechten Kemklemmsegment 5 und 6 gekoppelt, so dass diese sich synchron in radialer Richtung bewegen. Durch das Differenzdrehzahlgetriebe 10 wird die Rotationsbewegung der Trommel 1 mit der Bewegung der Kernklemmsegmente 5 und 6 exakt zueinander synchronisiert. Im Normalfall sollen sich die Kernklemmsegmente 5 und 6 nicht aus ihrer Ruheposition bewegen, wenn die Trommel 1 zum Anrollen des Gürtellaufstreifenpaketes mit einer vorgegebenen Rotationsgeschwindigkeit rotiert.

Die dritte zu koordinierende Bewegung an der Vorrichtung betrifft das Verfahren der Kernklemmsegmente 5 und 6 in axialer Richtung 4. Das Verfahren der Kernklemmsegmente 5 und 6 in axialer Richtung 4 wird über den Motor 12 gesteuert. Über den Motor 12 wird über ein zwischengeschaltetes Getriebe 34 die zweite Spindel 7 rotatorisch angetrieben. Die zweite Spindel 7 ist mit einer linken und rechten Spindelmutter 24 und 25 gekoppelt, die, bei einer Rotationsbewegung der Spindel 7, sich aufeinander zu oder voneinander weg bewegen. Die Bewegung erfolgt im Wesentlichen symmetrisch zu der axialen Mitte 28 der zweiten Spindel 7. Das symmetrische Auseinanderbewegen der Spindelmuttern 24 und 25 wird über ein entsprechendes gegenläufiges Gewinde an der Spindel 7 realisiert. Durch die Bewegung der Spindelmutter 24 in die dargestellte linke Richtung 31 werden die Kernklemmsegmente 4 und 5 zum Bombieren der Karkasse in axialer Richtung 4 verfahren. Gleichzeitig bewegt sich die Spindelmutter 25 in die rechte Richtung 30, wodurch der Schlitten 19 ebenfalls in diese Richtung bewegt wird. Durch die Bewegung des Schlittens 19, die durch die Verfahrbewegung 21 angezeigt wird, wird die Trommel 2 ebenfalls in die Richtung 21 bewegt. Die Trommelwelle 2 ist in der Hohlwelle bzw. Zwischenwelle 23 axial gelagert. Die Bewegung der Trommelwelle 2 in Richtung 21 bewirkt auf der linken Trommelseite ebenfalls ein Verfahren des Kernklemmsegmentes 5 in axialer Richtung 4. Auf diese Weise werden die Kernklemmsegmente 4 und 5 auf beiden Trommelseiten exakt zueinander in axialer Richtung 4 verfahren.
Das Differenzdrehzahlgetriebe 10 ist direkt mit dem zweiten Differenzdrehzahlgetriebe 11 gekoppelt. Dadurch ist es möglich, alle drei genannten Bewegungen exakt zueinander zu synchronisieren. Die erste Spindel 3 und die zweite Spindel 7 sind in dem Gehäuseteil 22 gelagert. Der Schlitten 19 ist über die Führung 20 auf dem Gehäuseteil 27 gelagert. Ein wesentlicher Vorteil der Erfindung besteht darin, dass alle drei genannten Bewegungen unabhängig voneinander ausgeführt werden können, wodurch die einzelnen Motoren nicht synchron laufen müssen. Außerdem können die Bewegungen alle gleichzeitig und kontrolliert durchgeführt werden.

### Bezugszeichenliste

### (ist Teil der Beschreibung)

- 1: Trommel, bzw. Bombiertrommel
- 2: Trommelwelle
- 3: erste Spindel zum Verfahren der Kernklemmsegmente in radialer Richtung
- 4: axiale Richtung
- 5: linkes Kernklemmsegment
- 6: rechtes Kemklemmsegment
- 7: zweite Spindel zum Verfahren der Kernklemmsegmente in axialer Richtung
- 8: Rollenhebel
- 9: erster Motor
- 10: erstes Differnzdrehzahlgetriebe
- 11: zweites Differnzdrehzahlgetriebe
- 12: dritter Motor
- 12b: zweiter Motor
- 13: erster Zahnriemen
- 14: zweiter Zahnriemen
- 15: dritter Zahnriemen
- 17: linke Spindelmutter
- 18: rechte Spindelmutter
- 19: Schlitten
- 20: Führung
- 21: Verfahrbewegung des Schlitten
- 22: Gehäuseteil für die Lagerung der ersten und zweiten Spindel
- 23: Zwischenwelle
- 24: linke Spindelmutter
- 25: rechte Spindelmutter
- 26: axiale Trommelmitte
- 27: Gehäuseteil für Lagerung der Zwischenwelle und Aufnahme der Führung
- 28: axiale Mitte der zweiten Spindel
- 29: radiale Richtung
- 30: Verfahrbewegung der rechten Spindelmutter nach rechts
- 31: Verfahrbewegung der rechten Spindelmutter nach links
- 32: linkes Zwischensegment für radiale Verfahrbewegung der Kernklemmsegmente
- 33: rechtes Zwischensegment für radiale Verfahrbewegung der Kernklemmsegmente
- 34: Getriebe zum Anpassen der Drehzahl der zweiten Spindel

## Patentansprüche

1. Vorrichtung zum Herstellen eines Fahrzeugreifens
mit einer Trommel (1) zum Bombieren eines Reifenrohlings,
einer Trommelwelle (2) für die Rotationsbewegung der Trommel (1) beim Anrollen eines Gürtel-Laufstreifenpaketes an eine Reifenkarkasse, Kernklemmsegmenten (5, 6) für die Aufnahme einer Reifenkarkasse,
**dadurch gekennzeichnet, dass**
die Vorrichtung eine Trommelwelle (2) mit einer rotierbaren Trommel (1), eine erste Spindel (3) zum Verfahren der Kernklemmsegmente (5, 6) in radialer Richtung (29) in mindestens zwei Positionen und
eine zweite Spindel (7) zum Verfahren der Kernklemmsegmente (8) in axialer Richtung (4) beim Bombieren der Reifenkarkasse aufweist,
wobei die Trommelwelle (2), die erste Spindel (3) und die zweite Spindel (7) mit jeweils einem Motor (9, 12, 12b) angetrieben werden und die Bewegungen der Trommelwelle (2), der ersten Spindel (3) und/oder der zweiten Spindel (7) mit mindestens einem Synchronisationsmittel (10, 11) miteinander synchronisiert werden,
wodurch die Rotationsbewegung der Trommel (1), die Verfahrbewegung der Kernklemmsegmente (5, 6) in radialer Richtung (29) und die Verfahrbewegung der Kernklemmsegmente in axialer Richtung (4) kontrolliert und synchronisiert unabhängig voneinander erfolgen,
wobei das Synchronisationsmittel (10, 11) in Form eines Differenzdrehzahlgetriebes ausgeführt ist.

2. Vorrichtung nach Anspruch 1,
**dadurch gekennzeichnet, dass**
die Trommelwelle (2) mit einem ersten Motor (9) angetrieben und die erste Spindel (3) mit einem zweiten Motor (12b) angetrieben wird,
wobei die Bewegung der Trommelwelle (2) mit der Bewegung der ersten Spindel (3) über das erste Differenzdrehzahlgetriebe (10) miteinander synchronisiert werden, wodurch beim Rotieren der Trommel (1) die Kernklemmsegmente (5, 6) in einer Ruheposition verbleiben oder kontrolliert verfahren werden.

3. Vorrichtung nach einem der vorhergehenden Ansprüche,
**dadurch gekennzeichnet, dass**
die zweite Spindel (7) zum Verfahren der Kernklemmsegmente (5, 6) in axialer Richtung (4) mit einem dritten Motor (12) angetrieben wird, wobei die Bewegung der zweiten Spindel (7) mit der Bewegung der ersten Spindel (3) über ein zweites Differenzdrehzahlgetriebes (11) miteinander synchronisiert werden, wodurch beim Verfahren der Kernklemmsegmente (5, 6) in axialer Richtung (4) die Kernklemmsegmente (5, 6) in radialer Richtung in einer Ruheposition verbleiben oder kontrolliert verfahren werden.

4. Vorrichtung nach einem der vorhergehenden Ansprüche,
**dadurch gekennzeichnet, dass**
die erste Spindel (3) innenliegend in einem Hohlraum der Trommelwelle (2) angeordnet ist.

5. Vorrichtung nach einem der vorhergehenden Ansprüche,
**dadurch gekennzeichnet, dass**
die zweite Spindel (7) außerhalb und parallel zur Trommelwelle (2) angeordnet ist.

6. Vorrichtung nach einem der vorhergehenden Ansprüche,
**dadurch gekennzeichnet, dass**
die zweite Spindel (7) eine linke und rechte Spindelmutter (24, 25) aufweist, wobei die rechte Spindelmutter (25) über einen Schlitten (19) die Trommelwelle (2) in axialer Richtung (4) verfährt, wodurch die Kernklemmsegmente (5, 6) auf beiden Seiten der Trommel (1) rotationssymmetrisch zueinander verfahren werden.

7. Vorrichtung nach Anspruch 6,
**dadurch gekennzeichnet, dass**
der Schlitten (19) die Trommelwelle (2) lagert und über eine Führung (20) in axialer Richtung (21) bewegt wird.

8. Vorrichtung nach einem der vorhergehenden Ansprüche,
**dadurch gekennzeichnet, dass**
das Differenzdrehzahlgetriebe (10, 11) in Form eines Planetengetriebes ausgeführt ist.

9. Vorrichtung nach einem der Ansprüche 3-8,
**dadurch gekennzeichnet, dass**
das erste und zweite Differenzdrehzahlgetriebe (10, 11) direkt miteinander verkoppelt sind, wodurch gleichzeitig die Bewegung der zweiten Spindel (7) mit der Bewegung der ersten Spindel (3) und der Trommelwelle (2) miteinander synchronisiert werden.

10. Vorrichtung nach einem der vorhergehenden Ansprüche,
**dadurch gekennzeichnet, dass**
die Differenzdrehzahlgetriebe (10, 11) über einzelne Zahnriemen (13, 14, 15) mit der ersten Spindel (3), zweiten Spindel (7) oder der Trommelwelle (2) gekoppelt sind.

11. Vorrichtung nach einem der vorhergehenden Ansprüche,
**dadurch gekennzeichnet, dass**
die Trommelwelle (2) über ein Zwischenwelle (23) angetrieben wird, wobei die Trommelwelle (2) in der Zwischenwelle (23) in axialer Richtung (4) verfahren werden kann.

12. Vorrichtung nach einem der vorhergehenden Ansprüche,
**dadurch gekennzeichnet, dass**
zwischen dem dritten Motor (12) und der zweiten Spindel (7) ein Getriebe (34) zum Anpassen der Drehzahl der zweiten Spindel (7) angeordnet ist.

## Claims

1. Apparatus for producing a vehicle tyre having a drum (1) for shaping a tyre blank, a drum shaft (2) for the rotational movement of the drum (1) during rolling of a belt/tread assembly onto a tyre carcass, bead clamping segments (5, 6) for receiving a tyre carcass **characterized in that**, the apparatus has a drum shaft (2) with a rotatable drum (1), a first spindle (3) for moving the bead clamping segments (5, 6) in the radial direction (29) into at least two positions, and a second spindle (7) for moving the bead clamping segments (5, 6) in the axial direction (4) when shaping the tyre carcass, the drum shaft (2), the first spindle (3) and the second spindle (7) being driven by way of in each case one motor (9, 12, 12b), and the movements of the drum shaft (2), the first spindle (3) and/or the second spindle (7) being synchronized with one another by way of at least one synchronizing means (10, 11), as a result of which the rotational movement of the drum (1), the displacing movement of the bead clamping segments (5, 6) in the radial direction (29) and the displacing movement of the take place in a controlled bead clamping segments in the axial direction (4) and synchronized manner independently of one another, the synchronizing means (10, 11) being configured in the manner of a differential speed gear mechanism.

2. Apparatus according to Claim 1, **characterized in that** the drum shaft (2) is driven by way of a first motor (9) and the first spindle (3) is driven by way of a second motor (12b), the movement of the drum shaft (2) and the movement of the first spindle (3) being synchronized with one another via the first differential speed gear mechanism (10), as a result of which the bead clamping segments (5, 6) remain in a rest position or are moved in a controlled manner during rotation of the drum (1).

3. Apparatus according to one of the preceding claims, **characterized in that** the second spindle (7) is driven by way of a third motor (12) in order to move the bead clamping segments (5, 6) in the axial direction (4), the movement of the second spindle (7) and the movement of the first spindle (3) being synchronized with one another via a second differential speed gear mechanism (11), as a result of which the bead clamping segments (5, 6) in the radial direction remain in a rest position or are moved in a controlled manner during movement of the bead clamping segments (5, 6) in the axial direction (4).

4. Apparatus according to one of the preceding claims, **characterized in that** the first spindle (3) is arranged so as to lie on the inside in a hollow space of the drum shaft (2).

5. Apparatus according to one of the preceding claims, **characterized in that** the second spindle (7) is arranged outside and parallel to the drum shaft (2).

6. Apparatus according to one of the preceding claims, **characterized in that** the second spindle (7) has a left-hand and right-hand spindle nut (24, 25), the right-hand spindle nut (25) moving the drum shaft (2) in the axial direction via a slide (19), as a result of which the bead clamping segments (5, 6) are moved toward one another in a rotationally symmetrical manner on both sides of the drum (1).

7. Apparatus according to Claim 6, **characterized in that** the slide (19) mounts the drum shaft (2) and is moved in the axial direction (21) via a guide (20).

8. Apparatus according to one of the preceding claims, **characterized in that** the differential speed gear mechanism (10, 11) is configured in the manner of a planetary gear mechanism.

9. Apparatus according to one of Claims 3 to 8, **characterized in that** the first and second differential speed gear mechanisms (10, 11) are coupled directly to one another, as a result of which the movement of the second spindle (7) and the movement of the first spindle (3) and the drum shaft (2) are synchronized with one another at the same time.

10. Apparatus according to one of the preceding claims, **characterized in that** the differential speed gear mechanisms (10, 11) are coupled to the first spindle (3), second spindle (7) or the drum shaft (2) via individual toothed belts (13, 14, 15).

11. Apparatus according to one of the preceding claims, **characterized in that** the drum shaft (2) is driven via an intermediate shaft (23), it being possible for the drum shaft (2) to be moved in the intermediate shaft (23) in the axial direction (4).

12. Apparatus according to one of the preceding claims, **characterized in that** a gear mechanism (34) for adapting the rotational speed of the second spindle (7) is arranged between the third motor (12) and the second spindle (7).

## Revendications

1. Dispositif de fabrication d'un pneu de véhicule comprenant un tambour (1) pour cintrer un pneu cru, un arbre de tambour (2) pour le mouvement de rotation du tambour (1) lors du roulage d'un ensemble bande de roulement-nappe de sommet sur une carcasse de pneu, des segments de serrage de noyau (5, 6) pour recevoir une carcasse de pneu,
**caractérisé en ce que**
le dispositif présente un arbre de tambour (2) avec un tambour rotatif (1), une première broche (3) pour le déplacement des segments de serrage de noyau (5, 6) dans la direction radiale (29) dans au moins deux positions et
une deuxième broche (7) pour le déplacement des segments de serrage de noyau (5, 6) dans la direction axiale (4) lors du cintrage de la carcasse de pneu,
l'arbre de tambour (2), la première broche (3) et la deuxième broche (7) étant entraînés avec un moteur respectif (9, 12, 12b) et les mouvements de l'arbre de tambour (2), de la première broche (3) et/ou de la deuxième broche (7) étant synchronisés les uns aux autres par au moins un moyen de synchronisation (10, 11),
de sorte que le mouvement de rotation du tambour (1), le mouvement de déplacement des segments de serrage de noyau (5, 6) dans la direction radiale (29) et le mouvement de déplacement des segments de serrage de noyau dans la direction axiale (4) s'effectuent de manière contrôlée et synchronisée indépendamment les uns des autres,
le moyen de synchronisation (10, 11) étant réalisé sous la forme d'une transmission différentielle.

2. Dispositif selon la revendication 1,
**caractérisé en ce que**
l'arbre de tambour (2) est entraîné par un premier moteur (9) et la première broche (3) est entraînée par un deuxième moteur (12b), le mouvement de l'arbre de tambour (2) et le mouvement de la première broche (3) étant synchronisés l'un à l'autre par le biais de la première transmission différentielle (10), de sorte que lors de la rotation du tambour (1), les segments de serrage de noyau (5, 6) restent dans une position de repos ou soient déplacés de manière contrôlée.

3. Dispositif selon l'une quelconque des revendications précédentes,
**caractérisé en ce que**
la deuxième broche (7) est entraînée pour déplacer les segments de serrage de noyau (5, 6) dans la direction axiale (4) par un troisième moteur (12), le mouvement de la deuxième broche (7) et le mouvement de la première broche (3) étant synchronisés l'un à l'autre par le biais d'une deuxième transmission différentielle (11), de sorte que lors du déplacement des segments de serrage de noyau (5, 6) dans la direction axiale (4), les segments de serrage de noyau (5, 6) dans la direction radiale restent dans une position de repos ou soient déplacés de manière contrôlée.

4. Dispositif selon l'une quelconque des revendications précédentes,
**caractérisé en ce que**
la première broche (3) est disposée à l'intérieur dans une cavité de l'arbre de tambour (2).

5. Dispositif selon l'une quelconque des revendications précédentes,
**caractérisé en ce que**
la deuxième broche (7) est disposée à l'extérieur de l'arbre de tambour (2) et parallèlement à celui-ci.

6. Dispositif selon l'une quelconque des revendications précédentes,
**caractérisé en ce que**
la deuxième broche (7) présente un écrou de broche gauche et droit (24, 25), l'écrou de broche droit (25) déplaçant l'arbre de tambour (2) dans la direction axiale (4) par le biais d'un chariot (19), de sorte que les segments de serrage de noyau (5, 6) soient déplacés les uns vers les autres avec une symétrie de révolution des deux côtés du tambour (1).

7. Dispositif selon la revendication 6,
**caractérisé en ce que**
le chariot (19) supporte l'arbre de tambour (2) et est déplacé par le biais d'un guide (20) dans la direction axiale (21).

8. Dispositif selon l'une quelconque des revendications précédentes,
**caractérisé en ce que**
la transmission différentielle (10, 11) est réalisée sous forme de transmission planétaire.

9. Dispositif selon l'une quelconque des revendications 3 à 8,
**caractérisé en ce que**
la première et la deuxième transmission différentielle (10, 11) sont accouplées directement l'une à l'autre, de sorte que le mouvement de la deuxième broche (7) et le mouvement de la première broche (3) et de l'arbre de tambour (2) soient simultanément synchronisés l'un à l'autre.

10. Dispositif selon l'une quelconque des revendications précédentes,
**caractérisé en ce que**
les transmissions différentielles (10, 11) sont accouplées par le biais de courroies dentées individuelles (13, 14, 15) à la première broche (3), la deuxième broche (7) ou l'arbre de tambour (2).

11. Dispositif selon l'une quelconque des revendications précédentes,
**caractérisé en ce que**
l'arbre de tambour (2) est entraîné par le biais d'un arbre intermédiaire (23), l'arbre de tambour (2) pouvant être déplacé dans la direction axiale (4) dans l'arbre intermédiaire (23).

12. Dispositif selon l'une quelconque des revendications précédentes,
**caractérisé en ce**
**qu'**entre le troisième moteur (12) et la deuxième broche (7) est disposée une transmission (34) pour adapter la vitesse de rotation de la deuxième broche (7).
